(19) **Europäisches Patentamt**
**European Patent Office**
**Office européen des brevets**

(11) **EP 3 001 146 A1**

(12) **EUROPEAN PATENT APPLICATION**

(43) Date of publication:
**30.03.2016 Bulletin 2016/13**

(51) Int Cl.:
***G01C 21/28*** (2006.01)

(21) Application number: **15186433.7**

(22) Date of filing: **23.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.09.2014 CN 201410511337**

(71) Applicant: **Bosch Automotive Products (Suzhou) Co., Ltd.**
**Jiangsu 215021 (CN)**

(72) Inventor: **Yu, Xiangpeng**
**215021 Suzhou, Jiangsu (CN)**

(74) Representative: **Bee, Joachim**
**Robert Bosch GmbH**
**C/IPE**
**Wernerstrasse 1**
**70469 Stuttgart (DE)**

(54) **METHOD AND SYSTEM FOR AIDING A NAVIGATION DEVICE IN DETERMINATION OF AN ELEVATED ROAD, AND NAVIGATION DEVICE**

(57) Method for aiding in determination of an elevated road is provided. The method includes determining relationship between a certain distance and a preset distance based on navigating by the navigation device; determining a first acceleration when the certain distance is in the preset distance, wherein the first acceleration is a acceleration in the direction that the vehicle is travelling which is caused by the slope of road; determining the slope of the road where the vehicle is travelling from the first acceleration; if increment of the determined slope is above an uphill threshold with the vehicle has passed the cross, then it is determined that the vehicle is heading to the elevated road; and if increment of the determined slope is above an downhill threshold in the preset distance, then it is determined that the vehicle is heading from the elevated road to the horizontal road. A corresponding system is also provided.

**Figure 1**

**Description**

FIELD OF THE INVENTION

The invention relates to navigation technology, and in particular, to a technology of determining an elevated road.

BACKGROUND

A satellite navigation system can assist users in accurately determining a current position and calculate the travel according to predetermined parameters. Therefore, the satellite navigation positioning system has been widely used in vehicles. However, during use, it is found that a navigation device, during navigating for a vehicle, usually cannot identify whether the vehicle is currently in an elevated road or in a horizontal road when the vehicle is traveling in a line in which the elevated road overlaps with the horizontal road. In such situation, the navigation device may erroneously determine the situation of current line, and thereby providing wrong information of navigation to the user.

In order to remove the problem as above mentioned, part of existing navigation devices are provided with human-machine interface for elevated roads. When the vehicle travels to a section of road in which the elevated road overlaps with the horizontal road, the navigate device with said human-machine interface will ask the driver which one of the elevated road and the horizontal road the vehicle is about to enter. Moreover, the other navigation devices are provided with an altimetric sensor such that they can determine whether the vehicle is traveling on the elevated road or on the horizontal road based on an output from the altimetric sensor.

SUMMARY OF THE INVENTION

In view of the above, the invention provides a method for aiding in determination of an elevated road and a system for aiding in determination an elevated road so as to facilitate a navigation device to navigate correctly in an elevated road.

The method for aiding a navigation device in determination of an elevated road according to the invention may include determining a relationship between a certain distance and a preset distance based on navigating by the navigation device, wherein the certain distance indicates a distance between a current location of a vehicle and a cross of the elevated road and horizontal road in which the cross is to be encountered by the vehicle in the traveling path; determining a first acceleration when the certain distance reaches the preset distance, wherein the first acceleration is an acceleration of the vehicle in the traveling direction thereof caused by the slope of road; determining the slope of the road where the vehicle is traveling from the determined first acceleration; if an increment of the determined slope exceeds an uphill threshold in case that the vehicle has passed said cross, then it is determined that the vehicle is heading from the horizontal road to the elevated road; and if a decrement of the determined slope exceeds a downhill threshold in the preset distance, then it is determined that the vehicle is heading from the elevated road to the horizontal road.

As an example, in the method for aiding a navigation device in determination of an elevated road according to the invention, the first acceleration is obtained based on an acceleration $\alpha_x$ of the vehicle in the traveling direction thereof determined by an acceleration sensor in the vehicle and a real acceleration $\alpha_r$ of the vehicle in the traveling direction thereof

As an example, in the method for aiding a navigation device in determination of an elevated road according to the invention, the first acceleration is obtained by subtracting a real acceleration $\alpha_r$ of the vehicle in the traveling direction thereof from an acceleration $\alpha_x$ of the vehicle in the traveling direction thereof determined by an acceleration sensor in the vehicle.

As an example, in the method for aiding a navigation device in determination of an elevated road according to the invention, the real acceleration $\alpha_r$ of the vehicle in the traveling direction thereof is determined according to the following equation:

$$a_r = \frac{T_p - T_b}{R \times m} - \frac{c \times v^2}{m}$$

wherein $\alpha_r$ is the real acceleration of the vehicle in the traveling direction thereof, $T_P$ is a driving torque obtained by the vehicle, $T_b$ is a braking torque obtained by the vehicle, R is a radius of the tire of vehicle, m is the mass of vehicle, c is a resistance coefficient of vehicle, and v is the speed of vehicle in the traveling direction thereof.

As an example, in the method for aiding a navigation device in determination of an elevated road according to the invention, the real acceleration $\alpha_r$ of the vehicle in the traveling direction thereof is obtained through a sensed value of a wheel speed sensor in the vehicle, and the acceleration $\alpha_x$ of the vehicle in the traveling direction thereof is obtained by an acceleration sensor in the vehicle.

As an example, in the method for aiding a navigation device in determination of an elevated road according to the invention, the acceleration $\alpha_x$ of the vehicle in the traveling direction thereof and the real acceleration $\alpha_r$ of the vehicle in the traveling direction thereof are obtained from an electronic stability control (ESC) system.

As an example, in the method for aiding a navigation device in determination of an elevated road according to the invention, determining the slope of the road where the vehicle is traveling from the determined first acceleration is made by according to an existing table indicating the relationship of the first acceleration and the slope of road.

The system for aiding a navigation device in determination of an elevated road according to the invention includes: a first unit for determining a relationship between a certain distance and a preset distance based on navigating by the navigation device, wherein the certain distance indicates a distance between a current location of a vehicle and a cross of the elevated road and horizontal road in which the cross is to be encountered by the vehicle in the traveling path; a second unit for determining a first acceleration when the certain distance reaches the preset distance, wherein the first acceleration is an acceleration of the vehicle in the traveling direction thereof caused by the slope of road; a third unit for determining the slope of the road where the vehicle is traveling from the determined first acceleration; a fourth unit used for determining whether the slope determined by the third unit has increased after the vehicle has passed said cross and for generating a signal indicating that the vehicle is heading from the horizontal road to the elevated road if an increment of the slope exceeds an uphill threshold; and a fifth unit used for determining whether the slope determined by the third unit has decreased in the preset distance and for generating a signal indicating that the vehicle is heading from the elevated road to the horizontal road if a decrement of the slope exceeds a downhill threshold.

As an example, in the system for aiding a navigation device in determination of an elevated road according to the invention, the second unit is configured to obtain the first acceleration based on an acceleration of the vehicle in the traveling direction thereof determined by an acceleration sensor in the vehicle and a real acceleration of the vehicle in the traveling direction thereof

As an example, in the system for aiding a navigation device in determination of an elevated road according to the invention, the second unit is configured to obtain the first acceleration by subtracting a real acceleration of the vehicle in the traveling direction thereof from an acceleration of the vehicle in the traveling direction thereof determined by an acceleration sensor in the vehicle.

As an example, in the system for aiding a navigation device in determination of an elevated road according to the invention, the second unit is configured to determine the real acceleration $\alpha_r$ of the vehicle in the traveling direction thereof according to the following equation:

$$a_r = \frac{T_p - T_b}{R \times m} - \frac{c \times v^2}{m}$$

wherein $\alpha_r$ is the real acceleration of the vehicle in the traveling direction thereof, $T_P$ is a driving torque obtained by the vehicle, $T_b$ is a braking torque obtained by the vehicle, R is a radius of the tire of vehicle, m is the mass of vehicle, c is a resistance coefficient of vehicle, and v is the speed of vehicle in the traveling direction thereof

As an example, in the system for aiding a navigation device in determination of an elevated road according to the invention, the second unit is configured to determine the real acceleration $\alpha_r$ of the vehicle in the traveling direction thereof through a sensed value of a wheel speed sensor in the vehicle, and to obtain the acceleration $\alpha_x$ of the vehicle in the traveling direction thereof by an acceleration sensor in the vehicle.

As an example, in the system for aiding a navigation device in determination of an elevated road for a navigation device according to the invention, the second unit is configured to obtain the acceleration $\alpha_x$ of the vehicle in the traveling direction thereof and the real acceleration $\alpha_r$ of the vehicle in the traveling direction from an electronic stability control (ESC) system.

According to the invention, a navigation device including a system for aiding a navigation device in determination of an elevated road according to any of the above described.

According to the invention, a navigation device including a communication interface which is communicable with a system for aiding a navigation device in determination of an elevated road according to any of the above described.

By performing the method according to the invention or employing the system according to the invention, a determination can be made to an elevated road without adding additional components to the vehicle.

BRIEF DESCRIPTION OF THE DRAWINGS

Fig. 1 is an illustrative flowchart of the method for aiding a navigation device in determination of an elevated road according to an embodiment of the invention.

Fig. 2 is an illustrative block of the structure of the system for aiding a navigation device in determination of an elevated road according to an embodiment of the invention.

DETAILED DESCRIPTION OF THE INVENTION

Illustrative examples of the invention will now be described with reference to the accompanying drawings, wherein like reference number denotes same element. The embodiments described below can help those skilled in the art to thoroughly understand the invention, and are intended to be illustrative instead of being limiting. The views of various elements, components, modules, devices and apparatus bodies in the drawings are not necessarily drawn to scale, and merely illustratively indicate relative relationships among these elements, components, modules, devices and apparatus bodies.

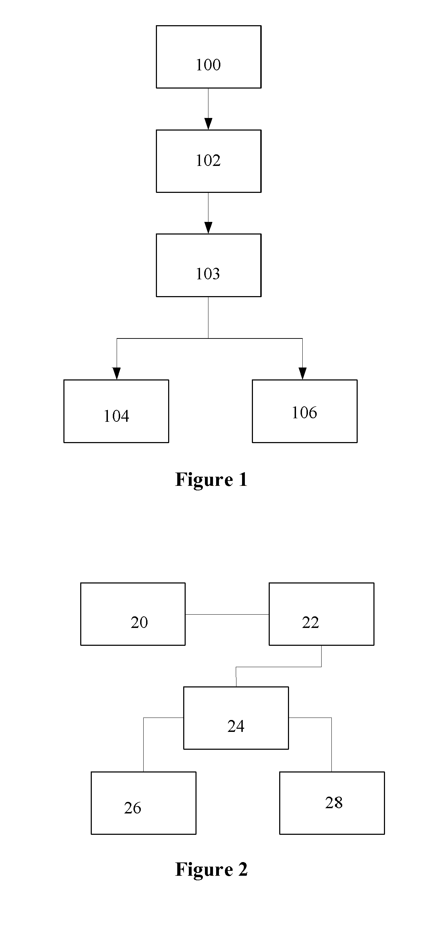

Fig. 1 is an illustrative flowchart of the method for aiding a navigation device in determination of an elevated road according to an embodiment of the invention. Said method can be implemented in a navigation device so as to be used by the navigation device. Alternatively, said method can be implemented in another device or element which can communicate with a navigation device. In the following description of various examples, the navigation device is used for providing navigation for the vehicle. Further, the navigation device is already in the process of navigating when the method shown in Fig. 1 is performed.

At step 100, a relationship between a certain distance and a preset distance is determined based on navigating performed by the navigation device. The term of certain distance herein represents a distance between a current location of a vehicle using said navigation device and a cross of the elevated road and horizontal road which will be encountered by the vehicle in the traveling path. During the navigation, the specific value of the certain distance can be obtained based on a path navigation conducted by the navigation device, and thus a relationship between the amount of the value and the amount of the preset distance can be determined. It can be understood that said cross of the elevated road and horizontal road which will be encountered by the vehicle in the traveling path refers to a cross of the elevated road and horizontal road which will be firstly encountered by the vehicle in the traveling path determined by the navigation device, with respect to the current location of the vehicle.

At step 102, when the certain distance reaches the preset distance, it starts to determine an acceleration of the vehicle in its traveling direction caused by the slope of road, in which the acceleration is referred to as a first acceleration hereinafter. It can be understood that the determination of the first acceleration is not a one-off behavior; rather, the determination is continuously made in a time period from the time when the determination is started to the time when the vehicle has entered an elevated road in parallel with a horizontal road or from the time when the determination is started to the time when the vehicle has entered the horizontal road. It is also noted that the comparison between the certain distance and the preset distance in step 100 can be performed continuously or can be performed once at intervals, e.g., once every other dozens of milliseconds. In this situation, it is possible a determination is made that the certain distance is larger than the present distance and an immediate determination is subsequently made that the certain distance is smaller than the present distance. Accordingly, according to examples of the invention, the situation in which certain distance reaches the preset distance includes the certain distance being equal to or smaller than the preset distance.

At step 103, the slope of the road where the vehicle is traveling is determined from the determined first acceleration. The slope of the road can be calculated from the known relationship between the first acceleration and the slope of the road. Alternatively, the slope of the road can be also obtained by looking up in a correspondence table showing the relationship between the first acceleration and the slope of the road based on the first acceleration.

At step 104, if an increment of the determined slope exceeds an uphill threshold in case that the vehicle has passed said cross in the navigation path, then it is determined that the vehicle is heading from the horizontal road to the elevated road. A signal indicating the vehicle is heading from the horizontal road to the elevated road can be generated as desired. If the determined slope of road increases and the increment is larger than the uphill threshold in case that the vehicle has passed the cross of the elevated road and horizontal road, then it is determined that the vehicle is heading from the horizontal road to the elevated road. The uphill threshold is for example 10°, i.e., the increment of slope exceeds 10°.

At step 106, if a decrement of the determined slope exceeds a downhill threshold in the preset distance, then it is determined that the vehicle is heading from the elevated road to the horizontal road. As desired, a signal indicating that the vehicle is heading from the elevated road to the horizontal road can be generated. If the determined slope of the road decreases in the preset distance as well as the decrement exceeds the downhill threshold, then it is determined that the vehicle is heading from the elevated road to the horizontal road. The downhill threshold is for example 10°, i.e., the decrement of slope exceeds 10°.

Those skilled in the art can understand that in a real road's environment, there might be minor undulations in both the horizontal road and the elevated road. Therefore, it can be considered that the vehicle is traveling in a flat road surface as long as the variation of slope does not exceed a certain range. Based on this consideration, the invention provides thresholds related to the variation of slope, i.e., an uphill threshold and a downhill threshold.

In the case that the method shown in Fig. 1 is implemented in another device (e.g., a portable electronic device) that is communicatively connected to the navigation device, upon the determination result at step 104 indicates that the vehicle is heading from the horizontal road to the elevated road, the signal indicating that the vehicle is heading from the horizontal road to the elevated road is generated and sent to the navigation device so that the navigation device can navigate correctly, and upon the determination result at step 106 indicates that the vehicle is heading from the elevated road to the horizontal road, the signal indicating that the vehicle is heading from the elevated road to the horizontal road is generated and sent to the navigation device, so that the navigation device can navigate correctly.

In the case that the method shown in Fig. 1 is implemented in the navigation device, upon the determination result of step 104 indicates that the vehicle is heading from the horizontal road to the elevated road, the navigation device will navigate correctly based on this determination result, and upon the determination result at step 106 indicates that the vehicle is heading from the elevated road to the horizontal road, the navigation device will navigate correctly based on this determination result. In practical application, the determination result at step 104 and the determination result at step 106 can be also generated as signals indicating the respective situations, and then the signals are sent to a processing component or the like for processing navigation of the navigation device.

The determination of the first acceleration can be made in different ways. According to an example of the invention, the first acceleration is obtained based on an acceleration of the vehicle in the traveling direction thereof determined by an acceleration sensor disposed in the vehicle and a real acceleration of the vehicle in the traveling direction thereof. An illustrative example of obtaining the first acceleration is illustratively provided herein; however, it should be understood that other manners for obtaining the first acceleration are not excluded.

The first acceleration $\alpha_s$ can be obtained by the equation (1) as shown below:

$$a_s = a_x - a_r \qquad (1)$$

wherein $\alpha_s$ is an acceleration of the vehicle caused by the slope of road, i.e., the first acceleration; $\alpha_x$ is an acceleration of the vehicle in the traveling direction thereof determined by the acceleration sensor; and $\alpha_r$ is a real acceleration of the vehicle in the traveling direction thereof.

The acceleration $\alpha_x$ is the acceleration of the vehicle in the traveling direction thereof sensed by the acceleration sensor already disposed in the vehicle. That acceleration can be directly obtained from the acceleration sensor or can be obtained indirectly via other ways. For example, for a vehicle equipped with an electronic stability control (ESC) system, $\alpha_x$ can be obtained from the ESC system.

An illustrative example of obtaining the real acceleration $\alpha_r$ of the vehicle in the traveling direction thereof is provided herein, but other ways of obtaining the real acceleration of the vehicle in the traveling direction thereof are not excluded.

If the vehicle is equipped with the ESC system, $\alpha_r$ can be obtained from the ESC system. Besides, the real acceleration of the vehicle can be calculated from wheel speed signal of the vehicle.

Alternatively, the real acceleration $\alpha_r$ of the vehicle in the traveling direction thereof can be obtained by the equation (2) as shown below:

$$a_r = \frac{T_p - T_b}{R \times m} - \frac{c \times v^2}{m} \qquad (2)$$

Wherein $\alpha_r$ is the real acceleration of the vehicle in the traveling direction thereof, $T_P$ is a driving torque obtained by the vehicle, $T_b$ is a braking torque obtained by the vehicle, R is a radius of the tire of vehicle, m is the mass of vehicle, c is a resistance coefficient of vehicle, and v is the speed of vehicle in the traveling direction thereof.

Four illustrative and non-limiting examples are briefly discussed below:

Example 1

In this example, the method as shown in figure 1 is implemented in a navigation device which can communicate with the ESC system in the vehicle to obtain required information.

The navigation device executing the method shown in Fig. 1 determines a relationship between the certain distance and the preset distance in navigating. When the certain distance reaches the preset distance, the real acceleration $\alpha_r$ of the vehicle in the traveling direction thereof is obtained from the ESC, and at the same time, the acceleration $\alpha_x$ of the vehicle in the traveling direction thereof determined by the acceleration sensor disposed in the vehicle is obtained from the ESC. Upon both real acceleration $\alpha_r$ and the acceleration $\alpha_x$ are obtained, the first acceleration $\alpha_s$ is calculated. Further, a slope corresponding to the determined first acceleration can be obtained from a correspondence table which is preset to indicate the relationship between the first acceleration and the slope. If an increment of the determined slope exceeds an uphill threshold in case that the vehicle has passed the cross in the navigation path, then it is determined that the vehicle is heading from the horizontal road to the elevated road; and if an increment of the determined slope is smaller than the uphill threshold (including the increment is 0) in case that the vehicle has passed the cross in the navigation path, then it is determined that the vehicle is still traveling along the road on which it moved. Accordingly, the navigation device can promptly provide a correct navigation path at the position where the elevated road overlaps with the horizontal road.

Further, in this example, the real acceleration $\alpha_r$ of the vehicle in the traveling direction thereof can be calculated from an output of a wheel speed sensor, or can be obtained directly from ESC, or can be obtained by ESC through the equation (2). As known, the ESC system comprises a wheel speed sensor, a braking pressure sensor, a steering wheel controller, a yaw speed sensor, an acceleration sensor, a hydraulic regulator, an engine managing system, a tire side slip angle, a vehicle steering angle, a set tire slippage rate and the like. In case that the vehicle is provided with the components as above stated, the ESC system can directly collect the signals from the stated components; and in case that the vehicle is not provided with the above described components, these components have to be provided when the ESC system is installed.

Accordingly, wheel speed sensed by the wheel speed sensor can be obtained directly form the ESC system, and thereby determining the real acceleration $\alpha_r$ of the vehicle in the traveling direction thereof and obtaining the acceleration $\alpha_x$ of the vehicle in the traveling direction thereof sensed by the acceleration sensor in the vehicle.

In case that $\alpha_r$ is obtained from the equation (2), $T_p$, $T_b$ and the speed v of the vehicle in the traveling direction thereof can be obtained directly from the ESC system or can be calculated by the ESC system; and the mass m of the vehicle and the resistance coefficient c of vehicle in the equation (2) can be configured according to the conditions of the vehicle.

Example 2

As compared to example 1, in this example, the method shown in Fig. 1 is implemented in other device which can communicate with the navigation device. For example, the method shown in figure 1 is implemented in one of the electronic instruments of the vehicle, or implemented in a separate electronic device, or implemented in a portable electronic device, such as a tablet computer and a mobile phone. As such, the other device (referred to as "the other device" in this example in order to distinguish from the navigation device) for implementing the method shown in Fig. 1 is communicatively connected to the ESC system to obtain required signals therefrom. Meanwhile, the other device is also communicatively connected to the navigation device so as to obtain navigation path and traveling conditions in the current path of vehicle or the like from the navigation device, and further determine the relationship between the certain distance and the preset distance according to the navigation information from the navigation device. When the vehicle is determined as heading from the horizontal road to the elevated road or heading from the elevated road to the horizontal road according to the method shown in figure 1, a corresponding signal is generated and sent to the navigation device.

Example 3

Example 3 is similar to example 1 in that the method shown in Fig. 1 is also implemented in the navigation device. Example 3 differs in example 1 in that the acceleration $\alpha_x$ of the vehicle in the traveling direction thereof is obtained directly form the acceleration sensor disposed in the vehicle and the information required for determining the real acceleration $\alpha_r$ of the vehicle in the traveling direction thereof is calculated directly from the information which is from the wheel speed sensor, rather than obtained from the ESC system as in example 1. When the real acceleration $\alpha_r$ is determined according to the equation (2), the required information is also collected from existing components in the vehicle such as engine, gear-box, instruments and master cylinder (for which a pressure sensor has to be provided), not from the ESC system. In this situation, the navigation device is communicatable with the related components disposed in the vehicle.

Example 4

Example 4 differs from example 3 in that the method shown in Fig. 1 is implemented in other device which can communicate with the navigation device. For example, the method shown in figure 1 is implemented in one of the electronic instruments of the vehicle, or implemented in a separate electronic device, or implemented in a portable electronic device, such as a tablet computer and a mobile phone. By doing so, the other device (referred to as "the other device" in this example in order to distinguish from the navigation device) for implementing the method shown in Fig. 1 obtains required information from the wheel speed sensor in order to determine the real acceleration $\alpha_r$ of the vehicle in the traveling direction thereof, and obtains the acceleration $\alpha_x$ of the vehicle in the traveling direction thereof sensed by the acceleration sensor in the vehicle directly from the acceleration sensor. A corresponding signal is generated and sent to the navigation device when the vehicle is determined as heading from the horizontal road to the elevated road or heading from the elevated road to the horizontal road.

If the real acceleration $\alpha_r$ of the vehicle in the traveling direction thereof is obtained according to the equation (2), the other device can also collect required information from existing components in the vehicle, such as engine, gear-box, instruments and master cylinder (for which a pressure sensor has to be provided), not from the ESC system. In this situation, the other device is communicable with the related components disposed in the vehicle.

According to the method as shown in Fig. 1, the identification of the elevated road is based on the determination of the slope. Therefore, it is only required to determine the first acceleration which is related to the slope. The determination of the first acceleration can be made merely based on components already existing in the vehicle. In case that the vehicle is equipped with the ESC system, the required information can be obtained from the ESC system. Additional components are not required for identifying the information on elevated road, which is different from some technical solutions in use. Therefore, with the method according to any example herein, the identification of elevated road can be realized in an economical way. Meanwhile, the identification is more accurate since the used signals are provided by the existing components in the vehicle.

Fig. 2 is an illustrative block of the structure of the system for aiding in determination of an elevated road according to an embodiment of the invention. As shown, the system for aiding in determination of an elevated road comprises a first unit 20, a second unit 22, a third unit 24, a fourth unit 26 and a fifth unit 28. Said system can be provided in a navigation device, or can be provided outside the navigation device with being connected to the navigation device in such a way that it is communicable with the navigation device.

The first unit 20 determines a relationship between a certain distance and a preset distance based on navigating performed by the navigation device. The term of certain distance herein represents a distance between a current location of a vehicle using said navigation device and a cross of the elevated road and horizontal road which will be encountered by the vehicle in the traveling path. During the navigation, the specific value of the certain distance can be obtained based on a path navigation conducted by the navigation device, and the first unit 20 can determine the relationship between the amount of the value and the amount of the preset distance accordingly. The preset distance can be set via a human-machine interface of the system for aiding in determination of an elevated road, for example. Optionally, the preset distance is configurable, that is, the specific value of the preset distance is adjustable. When the system for aiding in determination of an elevated road is provided in the navigation device, the preset distance can be set via a human-machine interface of the navigation device, for example.

The second unit 22 is used for determining the first acceleration when the certain distance reaches the preset distance, where the first acceleration is an acceleration of the vehicle in the traveling direction thereof caused by the slope of road. It can be understood that the determination of the first acceleration by the second unit 22 is not a one-off behavior; rather, the determination is continuously made in a period from the time when the determination begins to the time when the vehicle has entered an elevated road in parallel with a horizontal road or from the time when the determination begins to the time when the vehicle has entered the horizontal road. It is also noted that the comparison between the certain distance and the preset distance conducted by the first unit 20 can be performed continuously, or can be performed once at intervals, e.g., once every other dozens of milliseconds. In this situation, it is possible a determination is made that the certain distance is larger than the present distance and an immediate determination is subsequently made that the certain distance is smaller than the present distance. Accordingly, according to examples of the invention, the situation in which certain distance reaches the preset distance includes the certain distance being equal to or smaller than the preset distance

The third unit 24 is used for determining the slope of the road where the vehicle is traveling from the determined first acceleration. A relationship between the first acceleration and the slope of the road is known. And thus the slope of the road can be obtained by calculating according to the known relationship. Or, the slope of the road can be obtained by looking up in a correspondence table showing the relationship between the first acceleration and the slope of the road based on the first acceleration.

eration.

The fourth unit 26 is used for determining whether the slope determined by the third unit 24 has increased in case that the vehicle has passed the cross in the navigation path and used for generating a signal indicating that the vehicle is heading from the horizontal road to the elevated road if an increment of the slope exceeds an uphill threshold. In case that the vehicle has passed the cross of the elevated road and the horizontal road, if both the slope determined by the third unit 24 has increased and the increment exceeds the uphill threshold, the fourth unit 26 can determine that the vehicle is heading from the horizontal road to the elevated road. The uphill threshold is for example 10°, i.e., the increment of slope exceeds 10°.

The fifth unit 28 is used for determining whether the slope determined by the third unit 24 has decreased in the preset distance and used for generating a signal indicating that the vehicle is heading from the elevated road to the horizontal road if a decrement of the slope exceeds a downhill threshold. If both the determined slope of road decreases in the preset distance and the decrement exceeds the downhill threshold, then it is determined that the vehicle is heading from the elevated road to the horizontal road. The downhill threshold is for example 10°, i.e., the decrement of slope exceeds 10°.

When the system for aiding in determination of an elevated road is implemented in the navigation device, the signals generated by the fourth unit 26 and the fifth unit 28 are sent to a navigation processing component of the navigation device, respectively, so as to assist the navigation device in providing a correct navigation line. When the system for aiding in determination of an elevated road is implemented in other device that is communicably connected to the navigation device, the signals generated by the fourth unit 26 and the fifth unit 28 will be sent to the navigation device so as to assist the navigation device in navigating correctly.

As discussed above, the first acceleration $\alpha_s$ can be obtained in different ways. The second unit 22 can obtain the first acceleration $\alpha_s$ based on an acceleration of the vehicle in the traveling direction thereof determined by an acceleration sensor in the vehicle and a real acceleration of the vehicle in the traveling direction thereof. More specifically, the second unit 22 calculates the first acceleration $\alpha_s$ according to the equation (1). The system for aiding in determination of an elevated road is electrically connected to the related electronic elements existing in the vehicle, e.g., electrically connected to the acceleration sensor and the wheel speed sensor so as to obtain $\alpha_x$ and $\alpha_r$. The system for aiding in determination of an elevated road can be also electrically connected to the ESC system in the vehicle to obtain $\alpha_x$ and $\alpha_r$ therefrom. When the system for aiding in determination of an elevated road is implemented inside the navigation device, through the electrical connection between the navigation device and the acceleration sensor and the wheel speed sensor or the electrical connection between the navigation device and the ESC system, required data can be obtained for calculating the first acceleration $\alpha_s$. The first acceleration $\alpha_s$ can be also determined through the equation (2).

The system for aiding in determination of an elevated road according to the embodiment of the invention can be implemented in the navigation device in a form of software, or in other device that is communicably connected to the navigation device in a form of software. As an example, the system for aiding in determination of an elevated road can be also implemented in a form of hardware, or in a combination of hardware and software.

According to one aspect of the invention, a navigation device is provided. As compared to current commercially available navigation devices, the navigation device according to the invention has a communication interface. The navigation device communicates with the above described system for aiding in determination of an elevated road via the communication interface so as to obtain information related to traveling in elevated road therefrom, and thereby providing a more accurate navigation. The communication interface can be for example a wireless communication interface, or a RJ45 interface for connection with communicative electric wires, etc.

According to another aspect of the invention, a navigation device is further provided. As compared to current commercially available navigation devices, the navigation device comprises the above described system for aiding in determination of an elevated road.

In the system shown in Fig. 2, the identification of the elevated road is based on the determination of the slope, and is further based on the determination of the first acceleration related to the first acceleration. Moreover, the determination of the first acceleration can be obtained merely based on existing components in the vehicle without additional components for identifying the information on elevated road which are required in some current technical solutions in use. For example, in case that the vehicle is equipped with the ESC system, the required information can be obtained from the ESC system. If no ESC system is equipped, the required information can be obtained from the acceleration sensor and the wheel speed sensor in the vehicle.

The identification of elevated road can be realized in an economical way by executing the method for aiding a navigation device in determination of an elevated road according to the invention or employing the system for aiding in determination of an elevated road according to the invention. Meanwhile, the identification is made more accurate since the used signals are provided by existing components in the vehicle.

While specific embodiments of the invention have been disclosed above with reference to the drawings, those skilled in the art will understand that various variations or modifications can be made to the disclosed specific embodiments without departing from the spirit of the invention. The embodiments of the invention are merely used for illustrative purpose rather than limiting the invention.

## Claims

1. A method for aiding a navigation device in determination of an elevated road, comprising:

   determining a relationship between a certain distance and a preset distance based on navigating by the navigation device, wherein the certain distance represents a distance between a current location of a vehicle and a cross of the elevated road and horizontal road in which said cross is to be encountered by the vehicle in the traveling path;
   determining a first acceleration when the certain distance reaches the preset distance, wherein the first acceleration is an acceleration of the vehicle in the traveling direction thereof caused by the slope of road;
   determining the slope of the road where the vehicle is traveling from the determined first acceleration;
   wherein if an increment of the determined slope exceeds an uphill threshold in case that the vehicle has passed said cross, then it is determined that the vehicle is heading from the horizontal road to the elevated road; and if a decrement of the determined slope exceeds a downhill threshold in the preset distance, then it is determined that the vehicle is heading from the elevated road to the horizontal road.

2. The method for aiding a navigation device in determination of an elevated road according to claim 1, wherein the first acceleration is obtained based on an acceleration $\alpha_x$ of the vehicle in the traveling direction thereof determined by an acceleration sensor in the vehicle and a real acceleration $\alpha_r$ of the vehicle in the traveling direction thereof

3. The method of for aiding a navigation device in determination of an elevated road according to claim 2, wherein the first acceleration is obtained by subtracting a real acceleration $\alpha_r$ of the vehicle in the traveling direction thereof from an acceleration $\alpha_x$ of the vehicle in the traveling direction thereof determined by an acceleration sensor in the vehicle.

4. The method for aiding a navigation device in determination of an elevated road according to claim 3, wherein the real acceleration $\alpha_r$ of the vehicle in the traveling direction thereof is determined according to the following equation:

$$a_r = \frac{T_p - T_b}{R \times m} - \frac{c \times v^2}{m}$$

wherein $\alpha_r$ is the real acceleration of the vehicle in the traveling direction thereof, $T_P$ is a driving torque obtained by the vehicle, $T_b$ is a braking torque obtained by the vehicle, R is a radius of the tire of vehicle, m is the mass of vehicle, c is a resistance coefficient of vehicle, and v is the speed of vehicle in the traveling direction thereof

5. The method for aiding a navigation device in determination of an elevated road according to claim 3, wherein the real acceleration $\alpha_r$ of the vehicle in the traveling direction thereof is obtained through a sensed value of a wheel speed sensor in the vehicle, and the acceleration $\alpha_x$ of the vehicle in the traveling direction thereof is obtained by an acceleration sensor in the vehicle.

6. The method for aiding a navigation device in determination of an elevated road according to any of claims 2, 3 and 5, wherein the acceleration $\alpha_x$ of the vehicle in the traveling direction thereof and the real acceleration $\alpha_r$ of the vehicle in the traveling direction thereof are obtained from an electronic stability control (ESC) system.

7. The method for aiding a navigation device in determination of an elevated road according to any of claims 1 to 5, wherein determining the slope of the road where the vehicle is traveling from the determined first acceleration is made according to an existing table indicating the relationship of the first acceleration and the slope of road.

8. A system for aiding a navigation device in determination of an elevated road, comprising:

a first unit for determining a relationship between a certain distance and a preset distance based on navigating by the navigation device, wherein the certain distance represents a distance between a current location of a vehicle and a cross of the elevated road and horizontal road in which the cross is to be encountered by the vehicle in the traveling path;
a second unit for determining a first acceleration when the certain distance reaches the preset distance, wherein the first acceleration is an acceleration of the vehicle in the traveling direction thereof caused by the slope of road;
a third unit for determining the slope of the road where the vehicle is traveling from the determined first acceleration;
a fourth unit used for determining whether the slope determined by the third unit has increased after the vehicle has passed said cross and used for generating a signal indicating that the vehicle is heading from the horizontal road to the elevated road if an increment of the slope exceeds an uphill threshold; and
a fifth unit used for determining whether the slope determined by the third unit has decreased in the preset distance and used for generating a signal indicating that the vehicle is heading from the elevated road to the horizontal road if a decrement of the slope exceeds a downhill threshold.

9. The system for aiding a navigation device in determination of an elevated road according to claim 8, wherein the second unit is configured to obtain the first acceleration based on an acceleration $a_x$ of the vehicle in the traveling direction thereof determined by an acceleration sensor in the vehicle and a real acceleration $a_r$ of the vehicle in the traveling direction thereof

10. The system for aiding a navigation device in determination of an elevated road according to claim 9, wherein the second unit is configured to obtain the first acceleration by subtracting a real acceleration $a_r$ of the vehicle in the traveling direction thereof from an acceleration $a_x$ of the vehicle in the traveling direction thereof determined by an acceleration sensor in the vehicle.

11. The system for aiding a navigation device in determination of an elevated road according to claim 10, wherein the second unit is configured to determine the real acceleration $\alpha_r$ of the vehicle in the traveling direction thereof according to the following equation:

$$a_r = \frac{T_p - T_b}{R \times m} - \frac{c \times v^2}{m}$$

wherein $\alpha_r$ is the real acceleration of the vehicle in the traveling direction thereof, $T_P$ is a driving torque obtained by the vehicle, $T_b$ is a braking torque obtained by the vehicle, R is a radius of the tire of vehicle, m is the mass of vehicle, c is a resistance coefficient of vehicle, and v is the speed of vehicle in the traveling direction thereof.

12. The system for aiding a navigation device in determination of an elevated road according to claim 10, wherein the second unit is configured to determine the real acceleration $\alpha_r$ of the vehicle in the traveling direction thereof through a sensed value of a wheel speed sensor in the vehicle, and to obtain the acceleration $\alpha_x$ of the vehicle in the traveling direction thereof by an acceleration sensor in the vehicle.

13. The system for aiding a navigation device in determination of an elevated road according to any of claims 9, 10 and 12 wherein the second unit is configured to obtain the acceleration $\alpha_x$ of the vehicle in the traveling direction thereof and the real acceleration $\alpha_r$ of the vehicle in the traveling direction from an electronic stability control (ESC) system.

14. A navigation device including a system for aiding a navigation device in determination of an elevated road according to any one of claims 8-13.

15. A navigation device including a communicating interface which is communicable with a system for aiding a navigation device in determination of an elevated road according to any one of claims 8-13.

```
┌──────────┐
│   100    │
└──────────┘
      │
      ▼
┌──────────┐
│   102    │
└──────────┘
      │
      ▼
┌──────────┐
│   103    │
└──────────┘
      │
   ┌──┴──┐
   ▼     ▼
┌──────┐ ┌──────┐
│ 104  │ │ 106  │
└──────┘ └──────┘
```

**Figure 1**

```
┌──────────┐      ┌──────────┐
│    20    │──────│    22    │
└──────────┘      └──────────┘
                        │
              ┌─────────┘
           ┌──────────┐
           │    24    │
           └──────────┘
          ┌─────┴─────┐
   ┌──────────┐   ┌──────────┐
   │    26    │   │    28    │
   └──────────┘   └──────────┘
```

**Figure 2**

Europäisches
Patentamt
European
Patent Office
Office européen
des brevets

**EUROPEAN SEARCH REPORT**

Application Number

EP 15 18 6433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/080033 A1 (KOMATSU MICHIHISA [JP]) 13 April 2006 (2006-04-13) * paragraphs [0002] - [0061]; figures 1-12 * | 1-15 | INV. G01C21/28 |
| X | JP 10 253373 A (PIONEER ELECTRONIC CORP) 25 September 1998 (1998-09-25) * paragraph [0010] - paragraph [0014]; figure 1 * | 1-15 | |
| X | JP 2006 010657 A (ALPINE ELECTRONICS INC) 12 January 2006 (2006-01-12) * paragraphs [0003] - [0032]; figures 1-5 * | 1-15 | |
| A | EP 2 354 763 A2 (HTC CORP [TW]) 10 August 2011 (2011-08-10) * paragraphs [0003] - [0024]; figures 1-2 * | 1-15 | |
| A | JP 2001 194169 A (MATSUSHITA ELECTRIC IND CO LTD) 19 July 2001 (2001-07-19) * paragraphs [0013] - [0018] - paragraphs [0020] - [0031] * | 1-15 | TECHNICAL FIELDS SEARCHED (IPC) G01C G09B B60W G08G |
| A | US 2005/222758 A1 (ICHIDA TAKASHI [JP]) 6 October 2005 (2005-10-06) * paragraph [0009] - paragraphs [0036] - [0042]; figures 1-9 * | 1-15 | |
| A | JP 2003 114130 A (ALPINE ELECTRONICS INC) 18 April 2003 (2003-04-18) * paragraph [0006] - paragraphs [0020] - [0031] * | 1-15 | |
| A | EP 1 378 411 A1 (SUMITOMO RUBBER IND [JP]) 7 January 2004 (2004-01-07) * paragraphs [0004] - [0005] * | 1-15 | |

-/--

The present search report has been drawn up for all claims

| Place of search | Date of completion of the search | Examiner |
|---|---|---|
| The Hague | 11 December 2015 | Dragomir, Adrian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 18 6433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 676 308 A1 (HYUNDAI MOTOR CO LTD [KR]) 11 October 1995 (1995-10-11) * page 6, paragraph 1-9 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 11 December 2015 | Dragomir, Adrian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 18 6433

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2015

| Patent document cited in search report | Publication date | Patent family member(s) | Publication date |
|---|---|---|---|
| US 2006080033 A1 | 13-04-2006 | JP 4716703 B2<br>JP 2006105760 A<br>US 2006080033 A1 | 06-07-2011<br>20-04-2006<br>13-04-2006 |
| JP 10253373 A | 25-09-1998 | ----- | |
| JP 2006010657 A | 12-01-2006 | NONE | |
| EP 2354763 A2 | 10-08-2011 | EP 2354763 A2<br>TW 201128167 A<br>US 2011196607 A1 | 10-08-2011<br>16-08-2011<br>11-08-2011 |
| JP 2001194169 A | 19-07-2001 | NONE | |
| US 2005222758 A1 | 06-10-2005 | CN 1677059 A<br>JP 2005315851 A<br>US 2005222758 A1 | 05-10-2005<br>10-11-2005<br>06-10-2005 |
| JP 2003114130 A | 18-04-2003 | JP 3921095 B2<br>JP 2003114130 A | 30-05-2007<br>18-04-2003 |
| EP 1378411 A1 | 07-01-2004 | DE 60319632 T2<br>EP 1378411 A1<br>JP 2004037255 A<br>US 2004006421 A1 | 02-04-2009<br>07-01-2004<br>05-02-2004<br>08-01-2004 |
| EP 0676308 A1 | 11-10-1995 | AU 1631595 A<br>DE 69510587 D1<br>DE 69510587 T2<br>EP 0676308 A1<br>JP H0853024 A<br>US 5703776 A | 19-10-1995<br>12-08-1999<br>27-01-2000<br>11-10-1995<br>27-02-1996<br>30-12-1997 |

For more details about this annex : see Official Journal of the European Patent Office, No. 12/82